# EUROPÄISCHE PATENTSCHRIFT

(11) **EP 3 122 669 B1**
(45) Veröffentlichungstag und Bekanntmachung des Hinweises auf die Patenterteilung: **16.01.2019**
(21) Anmeldenummer: 15707872.6
(22) Anmeldetag: 24.02.2015
(51) Int. Cl.: B65G 65/30, E01B 27/02, E01B 27/00, B65G 67/24, B65G 67/10, E01B 27/04

(54) **VERFAHREN ZUR STEUERUNG DER SCHOTTERZUFUHR BEI DER SANIERUNG EINER SCHOTTERBETTUNG**
METHOD FOR CONTROLLING THE BALLAST SUPPLY DURING THE RENOVATION OF A RAILWAY BALLAST BED
PROCÉDÉ POUR COMMANDER L'ALIMENTATION DE BALLAST PENDANT LA RÉNOVATION DU LIT DE BALLAST D'UNE VOIE FERRÉE

(30) Priorität: 25.03.2014 AT 2112014
(43) Veröffentlichungstag der Anmeldung: 01.02.2017
(73) Patentinhaber: Plasser & Theurer Export von Bahnbaumaschinen Gesellschaft m.b.H., 1010 Wien (AT)
(72) Erfinder: WÖRGÖTTER, Herbert, 4209 Engerwitzdorf (AT)
(86) Internationale Anmeldenummer: PCT/EP2015/000418
(87) Internationale Veröffentlichungsnummer: WO 2015/144280

(56) Entgegenhaltungen:
- EP-A2- 2 500 470
- EP-A2- 2 708 647
- AT-B- 359 113
- AT-U2- 6 219
- DE-A1- 3 706 693
- DE-C2- 2 853 099
- US-A1- 2012 222 579

## Beschreibung

Die Erfindung betrifft ein Verfahren zur Sanierung einer Schotterbettung eines Gleises, wobei zu entfernendes altes Schüttgut unter Bildung einer Gleisbaustelle auf einer Anzahl von zu einem Verladezug verbundenen Speicherwagen gespeichert wird, während parallel dazu auf einer Anzahl von zu einem Verladezug verbundenen Speicherwagen vorgelagertes neues Schüttgut in die Gleisbaustelle eingebracht wird.

Durch US 7 192 238 ist es bekannt, eine beliebige Anzahl von Speicherwagen zu einem Verladezug zu verbinden. Da jeder Speicherwagen sowohl ein Boden- als auch ein Übergabeförderband aufweist, kann Schüttgut wahlweise entweder durch den Verladezug transportiert oder auf einem der Speicherwagen gespeichert werden. Zum Erreichen einer maximalen Beladung sind Tasteinrichtungen vorgesehen.

Weitere Verfahren und Vorrichtungen im Zusammenhang mit der Sanierung einer Schotterbettung eines Gleises sind aus AT359113B, AT6219U2, DE3706693A1, US2012222579A1, EP2708647A2, EP2500470A2 und DE2853099C2 bekannt; darunter offenbart DE3706693A1 ein Verfahren nach dem Oberbegriff des vorliegenden Anspruchs 1.

Die Aufgabe der vorliegenden Erfindung liegt nun in der Schaffung eines Verfahrens der eingangs genannten Art, mit dem eine verbesserte Baustellenabwicklung möglich ist.

Diese Aufgabe wird erfindungsgemäß mit einem Verfahren der gattungsgemäßen Art dadurch gelöst, dass die Einbringung des neuen Schüttgutes in die Gleisbaustelle in Abhängigkeit von einem Volumen des aus der Gleisbaustelle entfernten alten Schüttgutes automatisch gesteuert wird indem parallel zur Berechnung des Volumens des zu entfernenden alten Schüttgutes auch ein Volumen des zuzuführenden neuen Schüttgutes ermittelt wird, wobei die Berechnung der Volumina jeweils durch eine berührungslose zweidimensionale Abtastung des Schüttgutes im jeweiligen Speicherwagen in Verbindung mit einer Transportgeschwindigkeit eines für den Schüttguttransport in jedem Speicherwagen vorgesehenen Bodenförderbandes durchgeführt wird.

Dieser automatische Ausgleich von zu erneuerndem Schüttgut ist besonders für große Baustellen geeignet, um beispielsweise eine komplette Erneuerung einer Schotterbettung mit entsprechend großen Schüttgutmengen problemlos durchführen zu können.

Weitere Vorteile der Erfindung ergeben sich aus dem Unteranspruch und der Zeichnungsbeschreibung.

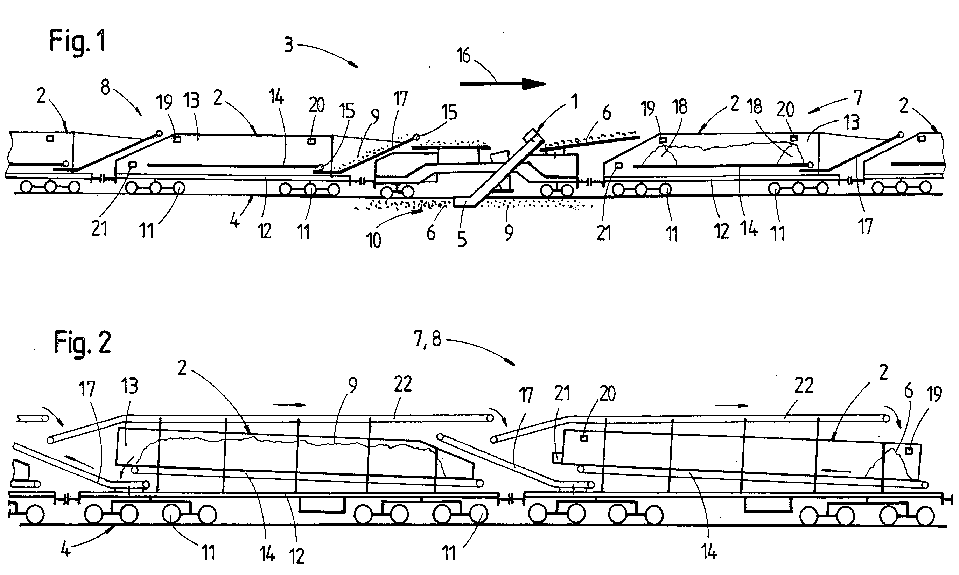

Im Folgenden wird die Erfindung anhand in der Zeichnung dargestellter Ausführungsbeispiele näher beschrieben. Es zeigen: Fig. 1 eine Seitenansicht einer mit zwei Verladezügen verbundenen Aushubmaschine, und Fig. 2 eine Variante eines Verladezuges.

In Fig. 1 ist eine im Wesentlichen aus einer Aushubmaschine 1 und mehreren Speicherwagen 2 zusammengesetzte Maschineneinheit 3 für eine Erneuerung einer Schotterbettung eines Gleises 4 dargestellt. Die Aushubmaschine 1 weist eine Räumkette 5 zur Aufnahme von altem, aus einer Gleisbaustelle 10 zu entfernenden Schotter bzw. Schüttgut 6 auf, das in einer Anzahl von zu einem ersten Verladezug 7 gekuppelten Speicherwagen 2 transportiert und gespeichert wird. Parallel dazu wird in einem zweiten Verladezug 8 in baugleichen Speicherwagen 2 vorgelagertes neues Schüttgut 9 - hier in Form von neuem Schotter - in die Gleisbaustelle 10 eingebracht.

Die Speicherwagen 2 bestehen im Wesentlichen jeweils aus einem - über zwei Schienenfahrwerke 11 auf dem Gleis 4 verfahrbaren - Wagenrahmen 12 und einem mit diesem verbundenen Speichercontainer 13. Ein in Wagenlängsrichtung verlaufendes Bodenförderband 14 bildet eine Bodenfläche des Speichercontainers 13 und weist einen Antrieb 15 zur Beaufschlagung in einer Transportrichtung 16 auf. Am - bezüglich dieser Transportrichtung 16 - vorderen Ende jedes Speichercontainers 13 ist ein Übergabeförderband 17 vorgesehen, dass unterhalb eines Abwurfendes des Bodenförderbandes 14 an dieses anschließend am Wagenrahmen 12 gelagert ist. Das Übergabeförderband 17 ist schräg nach oben führend über ein vorderes Wagenende vorkragend ausgebildet sowie mit einem Antrieb 15 ausgestattet.

Bei einem Verladezug 7, 8 bilden die einander endseitig überlappenden Boden- und Übergabeförderbänder 14, 17 der einzelnen Wagen eine durchgehende Förderbandstraße, wobei das Schüttgut 6 bzw. 9 jeweils von einem Abwurfende eines Übergabeförderbandes 17 auf das Bodenförderband 14 des in Transportrichtung 16 vorgeordneten Speicherwagens 2 weitergegeben wird. Bei höherer Transportgeschwindigkeit der Förderbänder 14, 17 wird das Schüttgut 6 bzw. 9 in einem sogenannten Durchförderbetrieb durch die Speichercontainer 13 lediglich in Längsrichtung des jeweiligen Verladezuges 7, 8 durchtransportiert.

Wird hingegen der Antrieb 15 eines Bodenförderbandes 14 auf langsame Transportgeschwindigkeit geschaltet, so kommt es dadurch im Rahmen eines sogenannten Speicherbetriebes zur Bildung eines Schüttkegels 18 und dementsprechend zur Speicherung des Schüttgutes 6 in diesem Speichercontainer 13.

Im bezüglich der Transportrichtung 16 hinteren Ende des Speichercontainers 13 ist eine Tasteinrichtung 19 vorgesehen, die zur laufenden Erfassung des Befüllungszustandes des Speicherwagens 2 dient. Die Tasteinrichtung 19 ist als berührungslos wirkende Laserdistanzmessvorrichtung ausgebildet, die den durch das abgeworfene alte Schüttgut 6 gebildeten Schüttkegel 18 kontinuierlich abtastet und dabei die Ladehöhe im Speichercontainer 13 erfasst.

Im bezüglich der Transportrichtung 16 vorderen Ende des Speichercontainers 5 ist eine zweite Tasteinrichtung 20 vorgesehen. Diese registriert das Erreichen des ersten Schüttkegels 18 und damit die vollständige Befüllung des Speichercontainers 13. Folglich wird die Geschwindigkeit des zugeordneten Bodenförderbandes 14 auf null reduziert und - falls vorhanden - im angrenzenden Speicherwagen 2 die Speicherung fortgesetzt.

Parallel zur Speicherung des alten Schüttgutes 6 erfolgt eine Zufuhr von im zweiten Verladezug 8 vorgelagerten neuen Schüttgut 9 in die Gleisbaustelle 10, um das entfernte Schüttgut 6 zu ersetzen. Dabei wird die Einbringung des neuen Schüttgutes 9 in die Gleisbaustelle 10 in Abhängigkeit von einem Volumen des aus der Gleisbaustelle 10 entfernten alten Schüttgutes 6 automatisch gesteuert.

Dazu wird parallel zur Berechnung des Volumens des zu entfernenden alten Schüttgutes 6 auch ein Volumen des zuzuführenden neuen Schüttgutes 9 ermittelt. Die Berechnung der Volumina kann jeweils durch eine berührungslose zweidimensionale Abtastung des Schüttgutes 6, 9 mit Hilfe der Tasteinrichtungen 19, 20 im jeweiligen Speicherwagen 2 in Verbindung mit einer Transportgeschwindigkeit des für den Schüttguttransport in jedem Speicherwagen 2 vorgesehenen Bodenförderbandes 14 durchgeführt werden. Dazu ist eine Steuereinrichtung 21 vorgesehen.

Das Volumen des - beispielsweise in Form von bei einer Schotterreinigung anfallendem Abraum - zu entfernenden Schüttgutes ist im Regelfall sehr unterschiedlich. Insofern ist eine zu diesen unterschiedlichen Schüttgutmengen korrelierende Zuführung von neuem Schüttgut - hier in Form von neuem Schotter - von besonderem Vorteil.

Alternativ zu der beschriebenen Abtastung des Schüttkegels wäre es für einen Volumenausgleich auch möglich, die Geschwindigkeit des das neue Schüttgut 9 zur Gleisbaustelle 10 transportierenden Bodenförderbandes 14 des Speicherwagens 2 automatisch in Abhängigkeit von einer Geschwindigkeit v des das alte Schüttgut 6 zur Speicherung aufnehmenden Bodenförderbandes 14 zu steuern. Dafür ist allerdings eine gleichmäßige Befüllung sämtlicher Speicherwagen 2 Voraussetzung.

In Fig. 2 ist alternativ ein aus speziellen Speicherwagen 2 zusammengesetzter, durch EP 1 083 262 bekannter Verladezug 7 bzw. 8 ersichtlich. In diesem Fall wird das alte Schüttgut 6 auf Förderbänder 22 zum - von der Gleisbaustelle 10 am weitesten entfernten Speicherwagen 2 transportiert und in diesem gespeichert. Dieser war zuvor noch mit neuem Schüttgut 9 gefüllt, das über die Boden- und Übergabeförderbänder 14, 17 parallel zum alten Schüttgut 6 zur Gleisbaustelle 10 transportiert wird. Auch in diesem Fall ist der beschriebene automatische Volumenausgleich möglich.

Eine weitere Variante für einen automatischen Schüttgutausgleich ist insofern möglich, als die Messung der Volumina direkt auf der Aushubmaschine 1 durch entsprechende Tasteinrichtungen durchgeführt wird.

## Patentansprüche

1. Verfahren zur Sanierung einer Schotterbettung eines Gleises, wobei zu entfernendes altes Schüttgut (6) unter Bildung einer Gleisbaustelle (10) auf einer Anzahl von zu einem Verladezug (7) verbundenen Speicherwagen (2) gespeichert wird, während parallel dazu auf einer Anzahl von zu einem Verladezug (8) verbundenen Speicherwagen (2) vorgelagertes neues Schüttgut (9) in die Gleisbaustelle (10) eingebracht wird, **dadurch gekennzeichnet, dass** die Einbringung des neuen Schüttgutes (9) in die Gleisbaustelle (10) in Abhängigkeit von einem Volumen des aus der Gleisbaustelle (10) entfernten alten Schüttgutes (6) automatisch gesteuert wird indem parallel zur Berechnung des Volumens des zu entfernenden alten Schüttgutes (6) auch ein Volumen des zuzuführenden neuen Schüttgutes (9) ermittelt wird, wobei die Berechnung der Volumina jeweils durch eine berührungslose zweidimensionale Abtastung des Schüttgutes (7, 8) im jeweiligen Speicherwagen (2) in Verbindung mit einer Transportgeschwindigkeit eines für den Schüttguttransport in jedem Speicherwagen (2) vorgesehenen Bodenförderbandes (14) durchgeführt wird.

2. Verfahren nach Anspruch 1, **dadurch gekennzeichnet, dass** die Geschwindigkeit des das neue Schüttgut (9) zur Gleisbaustelle (10) transportierenden Bodenförderbandes (14) des Speicherwagens (2) automatisch in Abhängigkeit von einer Geschwindigkeit des das alte Schüttgut (6) zur Speicherung aufnehmenden Bodenförderbandes (14) gesteuert wird.

## Claims

1. A method of rehabilitating a ballast bed of a track, wherein old bulk material (6) to be removed - in creating a track construction site (10) - is stored on a plurality of storage wagons (2) connected to form a loading train (7), while parallel thereto new bulk material (9) pre-deposited on a plurality of storage wagons (2) connected to form a loading train (8) is introduced into the track construction site (10), **characterized in that** the introduction of the new bulk material (9) into the track construction site (10) is controlled automatically in dependence on a volume of the old bulk material (6) removed from the track construction site (10) **in that** - parallel to the calculation of the volume of the old bulk material (6) to be removed - a volume of the new bulk material (9) to be supplied is determined also, wherein the calculation of the volumes is carried out in each case by a contact-less two-dimensional scanning of the bulk material (7, 8) in the respective storage wagon (2) in connection with a transporting speed of a bottom conveyor belt (14) provided for the bulk material transport in each storage wagon (2).

2. A method according to claim 1, **characterized in that** the speed of the bottom conveyor belt (14) of the storage wagon (2) transporting the new bulk material (9) to the track construction site (10) is controlled automatically in dependence on a speed of the bottom conveyor belt (14) receiving the old bulk material (6) for storage.

## Revendications

1. Procédé d'assainissement d'un lit de ballast d'une voie ferrée, dans lequel de l'ancienne marchandise en vrac à éliminer (6) est stockée sur un certain nombre de wagons de stockage (2) connectés à un train de chargement (7) en formant un chantier de travaux (10) tandis que parallèlement à cela, de la nouvelle marchandise en vrac (9) stockée au préalable sur un certain nombre de wagons de stockage (2) connectés à un train de chargement (8) est introduite dans le chantier de travaux (10), **caractérisé en ce que** l'introduction de la nouvelle marchandise en vrac (9) dans le chantier de travaux (10) est commandée automatiquement en fonction d'un volume de l'ancienne marchandise en vrac (6) éliminée du chantier de travaux (10) **en ce que** parallèlement au calcul du volume de l'ancienne marchandise en vrac à éliminer (6), un volume de la nouvelle marchandise en vrac à amener (9) est également déterminé, dans lequel le calcul des volumes est à chaque fois réalisé par un balayage bidimensionnel sans contact de la marchandise en vrac (7, 8) dans le wagon de stockage respectif (2) en connexion avec une vitesse de transport d'une bande transporteuse au sol (14) prévue pour le transport de marchandise en vrac dans chaque wagon de stockage (2).

2. Procédé selon la revendication 1, **caractérisé en ce que** la vitesse de la bande transporteuse au sol (14) transportant la nouvelle marchandise en vrac (9) vers le chantier de travaux (10) du wagon de stockage (2) est commandée automatiquement en fonction d'une vitesse de la bande transporteuse au sol (14) recevant l'ancienne marchandise en vrac (6) pour le stockage.
